(19) Europäisches Patentamt

European Patent Office

Office européen des brevets

(11) **EP 1 612 580 A1**

(12) **EUROPÄISCHE PATENTANMELDUNG**

(43) Veröffentlichungstag:
**04.01.2006  Patentblatt 2006/01**

(51) Int Cl.:
*G01S 17/66* (2006.01)  *G01S 17/93* (2006.01)

(21) Anmeldenummer: **05011074.1**

(22) Anmeldetag: **23.05.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **01.07.2004   DE 102004032118**

(71) Anmelder: **DaimlerChrysler AG**
**70567 Stuttgart (DE)**

(72) Erfinder:
• **Dickmann, Jürgen**
  **89079 Ulm (DE)**
• **Skutek, Michael**
  **89081 Ulm (DE)**
• **Prasanna, Rajan**
  **Nanganallur**
  **Chennai**
  **600 061 (IN)**

(54)    **Objekterkennungsverfahren für Fahrzeuge**

(57)    Die Erfindung betrifft ein Objekterkennungsverfahren für Fahrzeuge, mit wenigstens einem Sensor S zum zyklischen Erfassen einer Fahrzeugumgebung, dessen Messwerte M in ein frei vorgebbares Grid G projiziert und zu Grid-basierten Segmenten zusammenfassbar sind, welche erkannten Objekten O zugeordnet werden können, und bei dem Tracks für diese Objekte O ermittelt werden, die zum Steuern von Fahrzeugfunktionen heranziehbar sind, dadurch gekennzeichnet, dass die Schrittweite der Zellen Z des Grid G in Radial- und/oder Umfangsrichtung derart gestaltete unterschiedliche Schrittweiten aufweist, dass eine funktionsbezogen optimierte Objektauflösung erzielt wird.

Fig. 2

**Beschreibung**

Die Erfindung betrifft ein Objekterkennungsverfahren für Fahrzeuge, mit wenigstens einem Sensor zum zyklischen Erfassen einer Fahrzeugumgebung, dessen Messwerte in ein frei vorgebbares Grid projiziert und zu Grid-basierten Segmenten zusammenfassbar sind, welche erkannten Objekten zugeordnet werden können, und bei dem Tracks für diese Objekte ermittelt werden, die zum Steuern von Fahrzeugfunktionen heranziehbar sind.

Der Begriff Segmentierung beinhaltet hier die Zusammenfassung mehrerer Messpunkte aus den Rohdaten zB eines Laserscanners anhand bestimmter Kriterien. Ziel der Segmentierung ist die Unterteilung der Rohdaten in Segmente, die realen Objekten im Sichtbereich des Sensors zugeordnet werden können. Mögliche Fehler während der Segmentierung oder auch fehlerhafte Rohdaten können zu den Problemen führen, dass (1) ein Segment mehrere reale Objekte umfasst, (2) ein Objekt in unterschiedliche Segmente unterteilt wird, (3) einem realen Objekt kein Segment zugeordnet und damit das Objekt für nachfolgende Signalverarbeitungsstufen nicht mehr existent sein kann, und (4) kann auch ein Segment entstehen, welches objektiv keinem realen Objekt zuzuordnen ist.

Während der erste Punkt zumeist Folgen für die Genauigkeit und den Aufwand des Tracking-Algorithmus hat, kann der zweite Punkt vor allem Schwierigkeiten bei der Klassifikation der realen Objekte im Sichtbereich des Sensors verursachen. Die entsprechenden nachfolgenden Abschnitte gehen noch näher darauf ein. Die beiden letzten Punkte schlagen direkt auf die konkrete Anwendung, die letzte Stufe der Signalverarbeitung, durch.

Bei der Segmentierung sind folgende Aspekte zu berücksichtigen, um eine möglichst effektive Signalverarbeitung in nachgeschalteten Stufen zu ermöglichen bzw. Vorbereitungen zu treffen, die Fehler und damit den Aufwand zur Behebung dieser in nachgeschalteten Signalverarbeitungsstufen minimieren.

Bei der Filterung der Rohdaten ist neben der eindeutigen Zuordnung von Rohdaten(-gruppen) zu realen Objekten ist die Verhinderung von Scheinsegmenten, die zu Scheinobjekten führen, sehr wichtig. Erreicht wird dies durch Ausfiltern von Messwerten, die durch Messfehler und nicht durch die korrekte Entfernungsbestimmung zwischen Sensor und Objekt zustande gekommen sind.

Die Prädiktion und Innovation sind Teil des Trackings. Abhängig von Lage, Bewegungsrichtung, Abtastrate der Sensorik bzw. Taktrate des Tracking-Algorithmus und der Geschwindigkeit des Objekts zum Zeitpunkt t-1 wird eine Voraussage über die Lage des Objekts zum Zeitpunkt t gemacht und mit der Messung zu diesem Zeitpunkt zu einer neuen Lage vereint. Die Lage ist hierbei jedoch auf einen Punkt bezogen. Die Bildung eines Bezugspunktes kann die Qualität der Lageschätzung beeinflussen. Aufgrund der Relativbewegung der Objekte ändert sich die Kontur dieser und beeinflusst die Bestimmung des Bezugspunktes.

Dieser Einfluss ist zu minimieren, um keine Scheinbewegung der Objekte zu generieren.

Die Assoziation als Teil des Trackings bestimmt die Zuordnung der Segmente zu bereits etablierten Objekten. Gerade bei hohen Geschwindigkeiten, geringen Abtastraten des Sensors und vielen Objekten ist die Zuordnung eines Segments zu einem Objekt erschwert. Insbesondere trifft das auf Objekte zu, für die aufgrund fehlender Historie noch keine verlässliche Prädiktionsaussage verfügbar ist. Einige aus den Segmenten extrahierte, möglichst aussagekräftige Merkmale können bei der Zuordnung von Segmenten zu bereits bestehenden Objekten helfen.

Im Falle einer nachgeschalteten Klassifikation sind neben der Betrachtung von Bewegungsabläufen der Objekte auch Form bzw. Kontur von großer Bedeutung für die Güte der Klassifikation. Hier sind ebenso wie bei der Assoziation einige aussagekräftige Merkmale der Segmente nützlich.

Ein recht naheliegender Ansatz zur Bildung von Segmenten besteht in der Suche nach zusammenhängenden Punkten anhand geometrischer Abstandskriterien. Hierbei erfolgt die Zusammenfassung der Entfernungsmessungen mit Hilfe von Suchbereichen, die schrittweise in $\varphi$-Richtung über die Messungen gelegt werden.

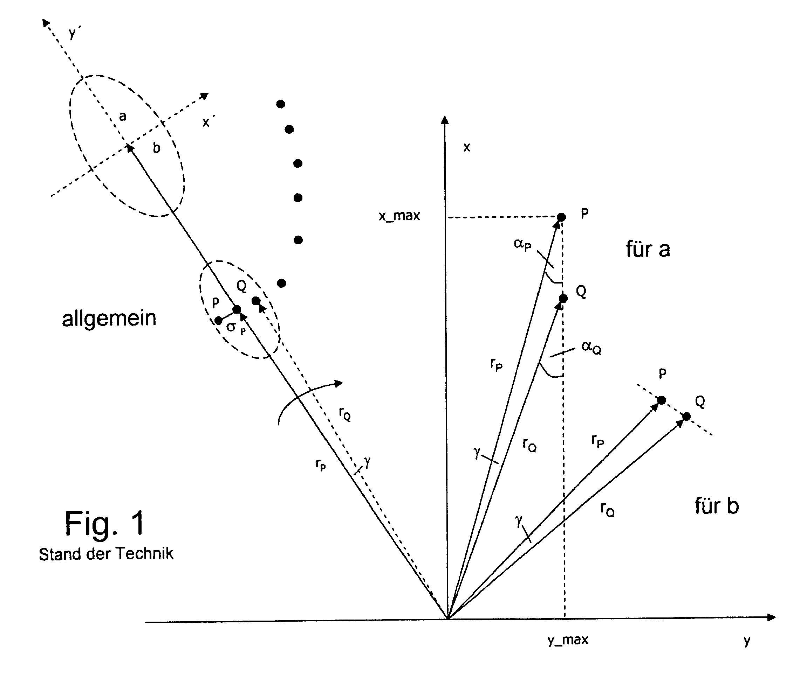

Die beigefügte Figur 1 (Stand der Technik) zeigt einen elliptischen Suchbereich für die Segmentierung. Solange nachfolgende Messungen innerhalb des Suchbereiches liegen, sind sie dem aktuellen Segment zuzuordnen. Liegen nachfolgende Messungen außerhalb des Bereiches, beginnt ein neues Segment.

Mögliche Formen der Suchbereiche sind zB Rechteck, Kreis oder Ellipse. Kriterium für die Qualität eines Suchbereiches ist hierbei die möglichst genaue Abbildung der geometrischen Eigenschaften des Messverfahrens und der physikalischen Eigenschaften des Sensors. Im Falle des Laserscanners gilt für den Abstand zwischen zwei benachbarten Messpunkten:

$$d_{PQ} = f(\gamma, r_P, r_Q). \tag{1}$$

Der Abstand der Messwerte in den Punkten P und Q hängen von der Winkelauflösung $\gamma$ und den Abständen $r_P$ und $r_Q$ zwischen Sensor und den Punkten $P$ bzw. $Q$ ab und lässt sich am rechtwinkligen Fall zeigen:

$$r_P = \frac{y}{\sin \alpha_P} \qquad (2)$$

$$r_Q = \frac{y}{\sin \alpha_Q} \qquad (3)$$

$$x_P = \frac{y}{\tan \alpha_P} \qquad (4)$$

$$x_Q = \frac{y}{\tan \alpha_Q} \qquad (5)$$

$$d_{PQ} = x_Q - x_P \qquad (6)$$

$$d_{PQ} = \frac{y}{\tan \alpha_Q} - \frac{y}{\tan \alpha_P} \qquad (7)$$

$$d_{PQ} = \sqrt{r_Q^2 - y^2} - \sqrt{r_P^2 - y^2} \qquad (8)$$

$$d_{PQ} = \sqrt{\left(\frac{y}{\sin \alpha_Q}\right)^2 - y^2} - \sqrt{\left(\frac{y}{\sin \alpha_P}\right)^2 - y^2} \quad . \qquad (9)$$

Gegeben sei nun ein minimaler Einstrahlwinkel $\alpha$, ab dem die Totalreflexion der ausgesendeten Laserstrahlung an einem typischen Objekt erfolgt. Dieser Winkel bestimmt den maximalen Abstand zweier benachbarter Messpunkte eines Objekts. Hierbei gilt die Annahme, dass beide Punkte auf einer Geraden liegen:

$$d_{max} = \lim_{r \to max, y \to min} \sqrt{r_Q^2 - y^2} - \sqrt{r_P^2 - y^2} \qquad (10)$$

Die Abmessungen des Suchbereiches im Falle eines Kreises ergeben sich mit den Skalierungsfaktoren zu:

$$r_K = S_{k(r)} \cdot d_{max} \qquad (11)$$

$$r_K = S_{k(r)} \cdot \left( \sqrt{r_{Q(max)}^2 - y_{min}^2} - \sqrt{r_{P(max)}^2 - y_{min}^2} \right) \qquad (12)$$

Der Kreis als Suchbereich ist damit zwar dynamisch für steigende r anpassbar, eine nähere Adaption des Suchbereiches an die Abhängigkeit von $\alpha$ ist jedoch nicht möglich. Die Suche ausgehend von Punkt $r_P$ erfolgt in alle Richtungen mit demselben Abstandskriterium. Die Verwendung eines rechteckigen oder elliptischen Suchbereiches ermöglicht die Einbeziehung der Abhängigkeit des Abstandes $d_{max}$ von $\alpha$. Für die Ellipse gilt dann:

$$r_E = \frac{x'^2}{a^2} + \frac{y'^2}{b^2} \qquad (13)$$

mit der Winkelauflösung $\gamma$ des Sensors:

$$a = 2 \cdot r \cdot \sin \frac{\gamma}{2} \qquad (14)$$

$$a = 2 \cdot \left( \sqrt{r_{Q(max)}^2 - y_{min}^2} - \sqrt{r_{P(max)}^2 - y_{min}^2} \right) \qquad (15)$$

Die Abhängigkeit des Abstandes zweier Punkte vom Einstrahlwinkel $\alpha$ ist hiermit zwischen den Grenzfällen durch a für $r_p = r_Q$ und b für $\alpha \to$ min in Form einer Ellipse gegeben:

$$d_{max\,x'} = S_{k(x')} \cdot a \qquad (16)$$

$$d_{max\,y'} = S_{k(y')} \cdot b \qquad (17)$$

$$r = \frac{x'^2}{(S_{K(x')} \cdot a)^2} + \frac{y'^2}{(S_{K(y')} \cdot b)^2} \qquad (18)$$

Zu beachten ist dabei noch, dass in der Regel für den minimal möglichen Einstrahlwinkel gilt:

$$\alpha_{min} > 0° \qquad (19)$$

Dies führt noch zu einem zusätzlichen Fehler bei der Bestimmung von $b$, da $b$ in der Ellipse letztendlich in $\alpha$ = 0 liegt. Dieser Fehler ist allerdings in der Regel für $S_k > 1$ und kleine $\alpha_{min}$ vernachlässigbar.
Für die Abbildung des Suchbereiches durch ein Rechteck gelten die Gleichungen 14 und 15 zur Berechung der Abmessungen analog. Die Suchbereiche sind bei Verwendung von Ellipse oder Rechteck entsprechend des aktuellen Abtastwinkels zu drehen, wie aus Figur 1 ebenfalls hervorgeht.
Die Adaption des Suchbereiches an verschiedene r entsprechend den Gleichungen 12 und 18 setzt jedoch die Wahl eines konstanten Wertes für $y_{min}$ voraus. Sinnvollerweise sollte $y_{min}$ der Abstand sein, ab dem an einem typischen Objekt (zB Fahrzeug), welches parallel zur y-Achse ausgerichtet ist, in der maximal detektierbaren oder benötigten Entfernung Totalreflexion der Laserstrahlung auftritt. Zudem ist die dynamische Adaption des Suchbereiches nur bis zu der Entfernung sinnvoll, in der die Aufweitung des Suchbereiches in Abhängigkeit der Winkelauflösung des Sensors gerade noch den Abmessungen eines zu detektierenden Objektes entspricht.

Diese Art der Zuordnung von verschiedenen Messpunkten zueinander ist allerdings nur innerhalb einer horizontalen Ebene des Laserscanners ohne weiteres nutzbar. Die Messwerte unterschiedlicher Ebenen können in Abhängigkeit des vertikalen Öffnungswinkels und der Objektabmessungen für denselben Messwinkel durchaus verschiedene Ergebnisse liefern. Dies erschwert eine Zusammenfassung der verschiedenen Ebenen. Die mit dieser Methode u.a. verwendbaren Möglichkeiten zur Zusammenfassung der verschiedenen Ebenen wären die folgenden.

Bei getrennter Segmentierung und späterer Zuordnung der Segmente geschieht dabei die Zusammenfassung der Messwerte und Zuordnung dieser zu einem realen Objekt für jede horizontale Ebene einzeln. Danach erfolgt die Zusammenfassung der Segmente der verschiedenen Ebenen zB mit Hilfe eines geometrischen Abstandskriteriums per Mittelung. Der Aufwand für die Segmentierung vervielfacht sich jedoch mit der Anzahl der Ebenen. Zudem nutzt dieses Verfahren die Möglichkeiten zur Verbesserung der Detektionsleistungen des Sensors nur unzureichend aus. Beispielhaft würde die gesamte Betrachtung aller Ebenen innerhalb eines Suchbereiches in einigen Fällen - im Gegensatz zur Betrachtung der einzelnen Ebenen - die Überschreitung eines Schwellwertes bedeuten, ab dem ein einfacher Rauschfilter eine Detektion als gesichert ansieht:

$$(A_1 < S) \quad (A_2 < S) \quad (A_3 < S) \tag{20}$$

$$(A_1 + A_2 + A_3) < S \tag{21}$$

Abhilfe kann hier die (gewichtete) Filterung während der Zusammenfassung der Segmente schaffen, was aber den Aufwand weiter erhöht. Die getrennte Betrachtung der Ebenen kann aber im Zusammenhang mit dem oben geschilderten Problem auch zu zusätzlichen Unterteilungen in den verschiedenen Ebenen führen, wenn Messwerte fehlen, die in anderen Ebenen vorhanden sein können. All diese Probleme sind lösbar, führen jedoch zu einem hohen (meist heuristischen) Aufwand in der Signalverarbeitung.

Bei Verknüpfung der Messwerte der verschiedenen Ebenen mittels Referenzebene ist Grundlage dieser Verknüpfungsvorschrift die Auswahl einer Referenzeben, von der ausgehend weitere Punkte in anderen Ebenen gesucht und miteinander verknüpft werden. Dabei ist ein (geometrisches) Distanzkriterium anzuwenden. Hier sind die Detektionsleistungen des Systems stark an eine Referenzebene geknüpft. Nicht vorhandene Daten in der Referenzebene oder zu große Abstände zwischen den Messwerten unterschiedlicher Ebenen können Objekte für das System unsichtbar machen.

Bei Verknüpfung der Messwerte der verschiedenen Ebenen mittels (gewichteter) UND-(ODER-)Funktionen sind die Messwerte der einzelnen Ebenen mittels (gewichteter) logischer Verknüpfungen miteinander zu verbinden und erst anschließend zu segmentieren. Dies funktioniert jedoch nur unter der Annahme, dass dieselben Objekte in allen Ebenen detektiert werden. In einer Fahrzeugumgebung ist das jedoch keine zulässige Annahme. Ein Beispiel hierfür ist das mögliche Detektieren der Fahrbahn in den unteren Ebenen bei starkem Bremsen.

Die vorstehend geschilderten Probleme insbesondere bei der Verknüpfung der verschiedenen Ebenen und der damit verbundenen Schwierigkeiten, die möglichen Verbesserungen der Detektionsleistungen vollständig auszunutzen, führten zu der Entwicklung eines Grid-basierten Segmentierungsverfahrens.

Die Grundidee der Grid-basierten Segmentierung besteht dabei darin, dass die Suchbereiche zur Zuordnung von Messwerten zueinander hier durch die Zellen eines Gitters (Grid) gebildet werden. Die Messwerte aller Ebenen werden in dieses Grid projiziert. Anhand eines Filterkriteriums erfolgt eine Markierung der Zelle als belegt. Ein entsprechend den Anforderungen gewählter Clusteralgorithmus ordnet die jeweils zusammengehörenden Zellen einander zu. Diese Information, zurückprojiziert auf die Messwerte, stellt dann die Segmentierung der Rohdaten und gleichzeitige Verknüpfung der verschiedenen Ebenen unter Ausnutzung der Detektivität der verschiedenen Ebenen.

Die Probleme, welche durch die Verwendung der im vorherigen Abschnitt genannten Verknüpfungsalgorithmen auftreten, sind zwar hier eliminiert. Die Abhängigkeiten der Suchbereichsgröße von der Entfernung $r$ und dem Einstrahlwinkel $\alpha$ gelten allerdings analog Gleichungen 9, 12 und 15 weiter.

Die US-amerikanische Offenlegungsschrift US 2001/0018640 A1 zeigt ein Grid-basiertes Detektionsverfahren für Hindernisse zum sicheren Betreiben selbstgesteuerter Fahrzeuge. Dabei werden dreidimensionale Koordinatenwerte eines Messpunkts auf horizontale und vertikale Ebenen projiziert, die in Zellen eines Segmentierungs-Grids unterteilt sind. Die Zellen werden dann in an sich bekannter Art als belegt / unbelegt markiert, anhand bestimmter Kriterien zusammengefasst, und diese Information zum Segmentieren der Rohdaten auf diese zurückprojiziert. Damit wird zwar eine Kopplung verschiedener Messebenen über die Koordinatenwerte vorgenommen. Zur sicheren Navigation eines Fahrzeugs wird allerdings eine weitläufige räumliche Erfassung der Fahrzeugumgebung in Form eines Histogramms notwendig, was das Verfahren für zeitkritische Anwendungen wie zB Sicherheitssysteme (Pre-Crash-Systeme) oder Fahrerassistenzsysteme (Abstandswarner, Adaptive Geschwindigkeitsregelung, Elektronische Deichsel) unbrauchbar macht. Bei den genannten Systemen sind besonders hohe Detektionsleistungen hinsichtlich Auflösungsqualität, -geschwindigkeit und - zuverlässigkeit notwendig.

Es ist Aufgabe der vorliegenden Erfindung, ein Verfahren der eingangs genannten Art bereitzustellen, das eine gegenüber herkömmlichen Verfahren verbesserte Detektionsleistung aufweist und auf einfache und kostengünstige Art zu realisieren ist.

Diese Aufgabe wird durch ein Verfahren gelöst, bei dem die Schrittweite der Zellen des Grid in Radial- und/oder Umfangsrichtung derart gestaltete unterschiedliche Schrittweiten aufweist, dass eine funktionsbezogen optimierte Objektauflösung erzielt wird.

Die Verwendung eines Grid zur Segmentierung und ersten Filterung der Messwerte stellt - im Gegensatz zur Segmentierung mittels einfachem Abstandskriterium - einen sehr allgemeinen und anpassbaren Ansatz dar, der gerade die Kombination der einzelnen Messebenen sehr vereinfacht.

Mit Blick auf die eingangs diskutierten Nachteile einer Zusammenfassung der Detektionsebenen geht die Erfindung dabei davon aus, dass eine Steigerung der Detektionsleistung eines Objekterkennungsverfahrens nur auf Basis eines Segmentierungs-Grids erfolgen kann. Das bedeutet aber, dass die Suchbereichgröße mit den gleichen Nachteilen wie aus Rechteck, Kreis oder Ellipse gebildeten Suchbereichen behaftet ist, dh von der Entfernung r und dem Einstrahlwinkel $\alpha$ abhängig sind. Ein solches Grid ist damit zu unflexibel hinsichtlich seiner Funktionsbezogenheit, also des spezifischen Anwendungszwecks.

Ein wesentlicher Punkt der vorliegenden Erfindung besteht deshalb darin, dass die genaue Abbildung des Grid den funktionsbezogenen Anforderungen entsprechend frei definiert wird. Zu beachten sind hier die Randbedingungen, welche zum einen aus den geometrischen Eigenschaften des Messverfahrens und zum anderen aus den Abmessungen der zu erwartenden Objekte resultieren. Insbesondere bestimmen aber die Anforderungen der Anwendung den Aufbau des Grids. So wird für Fahrerassistenzsysteme eher der Fernbereich, bei Sicherheitssystemen eher der mittlere und der Nahbereich eine erhöhte Auflösung erfahren müssen. Eine entsprechende Adaption des Grid an die tatsächlichen Anforderungen der Anwendung reduziert die Rechenzeit und erhöht die Auflösung der relevanten Erfassungsbereiche. Die Suchbereiche, abgebildet durch die Zellen des Grids, sind nur einmal während des Starts zu berechnen oder fest vorzugeben, zB in Tabellenform, was zudem Rechenzeit spart. Allerdings ist auch eine dynamische Anpassung für jeden Messzyklus möglich. Zur Berechnung des Grid ist ein entsprechender Algorithmus vorzusehen.

Vorteilhafte Weiterbildungen des Verfahrens sind in den Unteransprüchen 2 bis 11 angegeben.

In einer vorteilhaften Weiterbildung nimmt die Schrittweite der Zellen des Grid wenigstens über einen Teilbereich des Grid mit zunehmendem radialen Abstand vom Sensor zu. Dies ist dort sinnvoll, wo die geometrischen Abmessungen des Grid zu einer besonders hohen Zellendichte führen, zB im Nahbereich bis in den mittleren Bereich hinein. Dadurch reduziert sich die Rechenzeit bei funktionsbezogen ausreichender Auflösung, zB für die Pre-Crash-Erkennung.

Ein Vorteil entsteht, wenn die Schrittweitenzunahme der Zellen des Grid auf dessen mittleren Umfangsbereich beschränkt ist. Sinnvoll für die Verwendung des Ansatzes in der Fahrzeugumgebung ist eine feste Schrittweite in r-Richtung für besonders kleine r und für besonders große r aufgrund der Adaption an reale Objektgrößen. Im mittleren Teil sollte sich dann die Schrittweite zB entsprechend Gleichung 9 zur Anpassung an die geometrischen Eigenschaften des Messverfahrens erhöhen.

Ein weiterer Vorteil entsteht, wenn die Schrittweite der Zellen des Grid in Umfangsrichtung zu dessen seitlichen Rändern hin zunimmt. Dadurch werden Signale ausgeschlossen, die Rechenzeit beanspruchen und für die Anwendung möglicherweise keinen Beitrag liefern. Die Winkelauflösung wird dabei unter Beachtung der Winkelauflösung des Sensors entsprechend den zu erwartenden Objekte angepasst, zB durch niedrigere Auflösung im Randbereich aufgrund von Clutter (Störflecken) durch Bebauung und vor allem Pflanzen.

Bevorzugt entwickelt sich die zunehmende Schrittweite der Zellen des Grid in geometrischer mathematischer Folge. Dies stellt eine besonders einfache und rechenzeitoptimierte Ermittlung des Grid entsprechend

$$w_{k+1} = w_k \cdot q \tag{22}$$

dar, wobei
w - Schrittweite der Zelle,
k - Schritt, und

q - einen festen Faktor darstellt.

Besonders bevorzugt entwickelt sich die zunehmende Schrittweite der Zellen des Grid in exponentieller mathematischer Folge. Auch dadurch lässt sich eine besonders einfache und rechenzeitoptimierte Ermittlung des Grid entsprechend

$$w_{k+1} = w_k^{q} \qquad\qquad (23)$$

erzielen.

In einer weiteren vorteilhaften Weiterbildung werden die Messwerte von Sensoren mehrerer Ebenen in das Grid projiziert und segmentiert. Der Einfluss von Messfehlern und Messausfällen wird dadurch verringert und die Genauigkeit und Zuverlässigkeit des Verfahrens erhöht.

Besonders bevorzugt nimmt die Schrittweite der Zellen des Grid in dessen seitlichen Randbereichen mit zunehmendem radialen Abstand vom Sensor am stärksten zu. Damit lässt sich eine niedrigere Auflösung in den Randbereichen im Gegensatz zum Innenbereich des Grid erzielen, womit Störeinflüsse von zB einer Randbebauung ausgeschlossen werden, ohne die Erfassungsempfindlichkeit im Innern des Grid zu reduzieren.

Bevorzugt umfasst die Segmentierung der Messwerte einen Algorithmus vom Typ Connected Components Labeling. Dieser wird entsprechend den Anforderungen gewählt und ordnet die jeweils zusammengehörenden Zellen - auf Basis der Pixelkonnektivität der darin fallenden Messpunkte - einander zu. Es steht damit ein konventionell erhältlicher und rechenzeitoptimierter Algorithmus zur Verfügung.

Bevorzugt umfasst ein Filterkriterium zum Erkennen der Zellenbelegung die Anzahl der Messpunkte pro Zelle. Dieses Kriterium ist einfach zu bestimmen und deshalb ebenfalls rechenzeitoptimiert.

Aus Kostengründen wird das vorstehend beschriebene Verfahren bevorzugt unter Verwendung eines Laserscanners durchgeführt.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

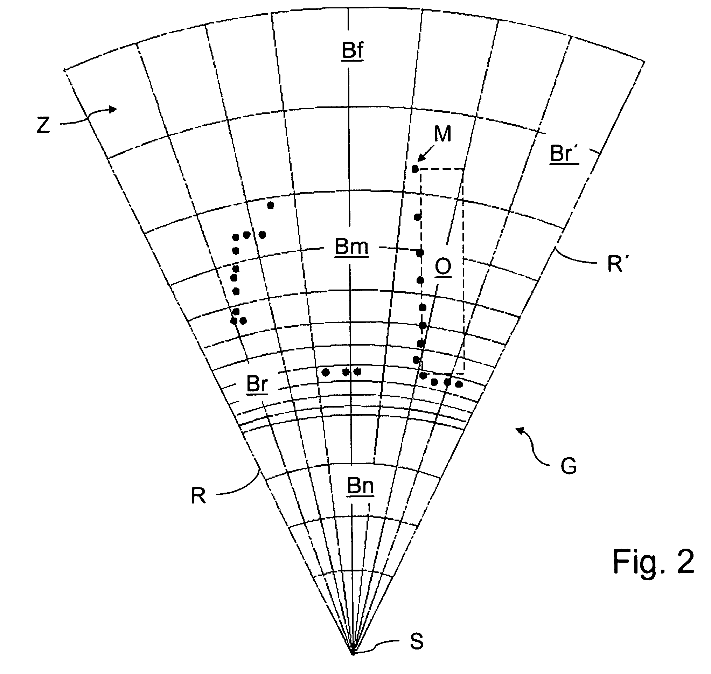

Die Erfindung wird im Folgenden anhand eines Ausführungsbeispiels unter Bezugnahme auf die beigefügte Figur 2 näher erläutert. Gleiche oder gleichwirkende Teile sind mit gleichen Bezugsziffern versehen.

Fig. 2 zeigt beispielhaft ein Grid G, dessen Nahbereich Bn zu einem Sensor S eine äquidistante Schrittweite von Zellen Z aufweist. Von einem mittleren Bereich Bm bis in einen Fernbereich Bf hinein nimmt die Schrittweite der Zellen Z geometrisch zu. Von dem Sensor S erfasste Messwerte potentieller Kollisionsobjekte O (von denen eines im Grid G beispielhaft eingetragen ist) aller Erfassungsebenen werden in das Grid G projiziert und anhand der Anzahl von Messpunkten pro Zelle festgestellt, welche der Zellen Z belegt sind. Zusammengehörige Zellen werden einander durch einen geeigneten Clusteralgorithmus zugeordnet und dieses Ergebnis zum Segmentieren der Rohdaten auf diese zurückprojiziert. Es entstehen Rohdatengruppen, die einem Objekt zugeordnet und aus denen Tracks der Objekte ermittelt werden. Jeder Track stellt dabei ein potentielles Kollisionsobjekt dar, wobei jedes tatsächliche Ziel durch wenigstens einen Track repräsentiert ist. Die Tracks können zB zur Steuerung von Sicherheitssystemen wie Airbags, Gurtstraffern usw verwendet werden.

Mit einer äquidistanten Schrittweite der Zellen Z des Grid G im Nahbereich Bn und einer - von einer geringeren Schrittweite als im Bereich Bn - zunehmenden Schrittweite über die Bereiche Bm und Bf ist die hier beschriebene Grid-Teilung für den vorstehenden Anwendungsfall ausgelegt. Potentielle Kollisionsobjekte O werden im Bereich Bm besonders hoch aufgelöst, um ein frühzeitiges (Pre-Crash)Auslösen der Sicherheitssysteme vor dem Nahbereich zu gewährleisten. Die Rechenzeit beschränkt sich dabei im wesentlichen auf den hochauflösenden Bereich Bm. In diesem Ausführungsbeispiel ist eine Verringerung der Auflösung in den Randbereichen Br, Br' des Grid G in Richtung der Ränder R, R' nicht vorgesehen, da eine Einflussnahme möglicher Randbebauung auf Grund des relativ schmalen Erfassungsbereichs des Sensors S nicht zu befürchten ist.

Durch die hier beispielhaft beschriebene, unter Sicherheitsaspekten vorgenommene Aufteilung des Grid G ist somit eine schnelle und genaue Erfassung und Verfolgung potentieller Kollisionsobjekte auf einfache und kostengünstige Art möglich. Die Detektionsleistung und -zuverlässigkeit des Verfahrens ist gegenüber dem herkömmlichen Verfahren deutlich erhöht.

Bezugszeichenliste

Bm        Mittlerer Umfangsbereich

Br, Br'    Seitlicher Randbereich
Bf    Fernbereich
G    Grid
M    Messwerte
Bn    Nahbereich
O    Objekt
R, R'    Seitlicher Rand
S    Sensor
Z    Zelle

**Patentansprüche**

1. Objekterkennungsverfahren für Fahrzeuge, mit wenigstens einem Sensor (S) zum zyklischen Erfassen einer Fahrzeugumgebung, dessen Messwerte (M) in ein frei vorgebbares Grid projiziert und zu Grid-basierten Segmenten zusammenfassbar sind, welche erkannten Objekten (O) zugeordnet werden können, und bei dem Tracks für diese Objekte (O) ermittelt werden, die zum Steuern von Fahrzeugfunktionen heranziehbar sind,
**dadurch gekennzeichnet, dass**
die Schrittweite der Zellen (Z) des Grid (G) in Radial-und/oder Umfangsrichtung derart gestaltete unterschiedliche Schrittweiten aufweist, dass eine funktionsbezogen optimierte Objektauflösung erzielt wird.

2. Verfahren nach Anspruch 1,
**dadurch gekennzeichnet,**
**dass** die Schrittweite der Zellen (Z) des Grid (G) über wenigstens einen Teilbereich des Grid (G) mit zunehmendem radialen Abstand vom Sensor (S) zunimmt.

3. Verfahren nach Anspruch 2,
**dadurch gekennzeichnet,**
**dass** die Schrittweitenzunahme der Zellen (Z) des Grid (G) auf dessen mittleren Umfangsbereich (Bm) beschränkt ist.

4. Verfahren nach Anspruch einem der vorstehenden Ansprüche,
**dadurch gekennzeichnet,**
**dass** die Schrittweite der Zellen (Z) des Grid (G) in Umfangsrichtung zu dessen seitlichen Rändern (R, R') hin zunimmt.

5. Verfahren nach Anspruch einem der vorstehenden Ansprüche,
**dadurch gekennzeichnet,**
**dass** sich die zunehmende Schrittweite der Zellen (Z) des Grid (G) in geometrischer mathematischer Folge entwickelt.

6. Verfahren nach Anspruch einem der vorstehenden Ansprüche,
**dadurch gekennzeichnet,**
**dass** sich die zunehmende Schrittweite der Zellen (Z) des Grid (G) in exponentieller mathematischer Folge entwickelt.

7. Verfahren nach Anspruch einem der vorstehenden Ansprüche,
**dadurch gekennzeichnet,**
**dass** die Schrittweite der Zellen (Z) des Grid (G) in dessen seitlichen Randbereichen (Br, Br') mit zunehmendem radialen Abstand vom Sensor (S) am stärksten zunimmt.

8. Verfahren nach Anspruch einem der vorstehenden Ansprüche,
**dadurch gekennzeichnet,**
**dass** die Messwerte (M) von Sensoren (S) mehrerer Ebenen in das Grid (G) projiziert und segmentiert werden.

9. Verfahren nach Anspruch einem der vorstehenden Ansprüche,
**dadurch gekennzeichnet,**
**dass** die Segmentierung der Messwerte (M) einen Algorithmus vom Typ Connected Components Labeling umfasst.

10. Verfahren nach Anspruch einem der vorstehenden Ansprüche,

**dadurch gekennzeichnet,**
**dass** ein Filterkriterium zum Erkennen der Zellenbelegung die Anzahl der Messpunkte pro Zelle (Z) umfasst.

11. Verwendung eines Laserscanners zum Durchführen des Verfahrens nach einem der vorstehenden Ansprüche.

Fig. 1
Stand der Technik

allgemein

für a

für b

EP 1 612 580 A1

Fig. 2

R'

Br'

G

M

O

S

Bf

Bm

Bn

Br

R

Z

**Europäisches Patentamt**

## EUROPÄISCHER RECHERCHENBERICHT

Nummer der Anmeldung

EP 05 01 1074

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A,D | US 2001/018640 A1 (MATSUNAGA SHINICHI) 30. August 2001 (2001-08-30) * das ganze Dokument * ----- | 1-11 | G01S17/66 G01S17/93 |
| A | US 2002/107637 A1 (OKAMURA SHIGEKAZU ET AL) 8. August 2002 (2002-08-08) * das ganze Dokument * ----- | 1-11 | |
| A | US 5 455 669 A (WETTEBORN ET AL) 3. Oktober 1995 (1995-10-03) * Abbildung 12 * ----- | 1-11 | |
| A | US 6 265 991 B1 (NISHIWAKI TAKESHI ET AL) 24. Juli 2001 (2001-07-24) * Abbildungen 3,4,7-9,12-14 * ----- | 1-11 | |
| A | EP 0 619 501 A (RAYTHEON COMPANY) 12. Oktober 1994 (1994-10-12) * Abbildungen 4,7 * ----- | 1-11 | |
| A | US 5 210 586 A (GRAGE ET AL) 11. Mai 1993 (1993-05-11) * Spalte 7, Zeilen 42-50; Abbildung 5 * ----- | 1-11 | **RECHERCHIERTE SACHGEBIETE (Int.Cl.7)** G01S |

Der vorliegende Recherchenbericht wurde für alle Patentansprüche erstellt

| Recherchenort | Abschlußdatum der Recherche | Prüfer |
|---|---|---|
| München | 25. Oktober 2005 | Schmelz, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 01 1074

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-10-2005

| Im Recherchenbericht angeführtes Patentdokument | | Datum der Veröffentlichung | Mitglied(er) der Patentfamilie | | | Datum der Veröffentlichung |
|---|---|---|---|---|---|---|
| US 2001018640 | A1 | 30-08-2001 | JP | 2001242934 | A | 07-09-2001 |
| US 2002107637 | A1 | 08-08-2002 | JP | 3645177 | B2 | 11-05-2005 |
| | | | JP | 2002168953 | A | 14-06-2002 |
| US 5455669 | A | 03-10-1995 | JP | 6214027 | A | 05-08-1994 |
| US 6265991 | B1 | 24-07-2001 | JP | 2001167396 | A | 22-06-2001 |
| EP 0619501 | A | 12-10-1994 | JP | 7005257 | A | 10-01-1995 |
| | | | US | 5309408 | A | 03-05-1994 |
| | | | US | 5400300 | A | 21-03-1995 |
| US 5210586 | A | 11-05-1993 | EP | 0464263 | A2 | 08-01-1992 |

Für nähere Einzelheiten zu diesem Anhang : siehe Amtsblatt des Europäischen Patentamts, Nr.12/82

EPO FORM P0461